# DEMANDE DE BREVET EUROPEEN

(11) **EP 1 783 532 A1**
(43) Date de publication de la demande: **09.05.2007**
(21) Numéro de dépôt: 05292330.7
(22) Date de dépôt: 03.11.2005
(51) Int. Cl.: G02B 27/09, G01N 21/00, F21V 14/00, F21V 21/06, F21V 21/28

(54) **Unité d'éclairage en incidence rasante.**

(71) Demandeur: SFIR (Société Financière et de Réalisation ), 95140 Garges les Gonesse (FR)
(72) Inventeur: Noel, Dominique, 76000 Rouen (FR)
(74) Mandataire: Schwartz, Thierry J.

(57) **Abrégé**

L'invention se rapporte à une unité d'éclairage, de préférence mobile et autonome, destinée à réaliser un éclairage en incidence rasante pour effectuer un contrôle par inspection visuelle d'un état de surface, par exemple de murs (2000) ou de plafonds dans les logements en réfection, caractérisé en ce qu'elle comporte une rampe (100) de sources lumineuses (120) à faisceau directif (130) et un boîtier de logement (200) de ladite rampe (100) monté en rotation autour d'au moins un axe sur un pied (300), ladite rampe (100) étant équipée de moyens opto-mécaniques de formation d'un pinceau lumineux ayant une ouverture angulaire (α) dans une direction longitudinale sensiblement supérieure à son ouverture angulaire (β) dans une direction transverse.

## Description

L'invention se rapporte à une unité d'éclairage, de préférence mobile et autonome, destinée à réaliser un éclairage en incidence rasante pour effectuer un contrôle par inspection visuelle d'un état de surface, par exemple de murs ou de plafonds dans les logements mis en réfection ou en peinture.

De nombreux dispositifs d'éclairage pour le contrôle de surfaces sont connus.

Ainsi, un contrôle d'état de surface de matériaux semiconducteurs est effectué généralement par interférométrie, comme décrit par exemple dans les documents de brevet WO 0177612 ou US 5 909 281. Cette technologie est complexe et agit à des échelles microscopiques, qui ne sont pas adaptées à l'échelle macroscopique de la présente invention.

A l'échelle de la présente invention, les dispositifs d'éclairage comportent une lampe d'éclairage pouvant être aisément déplacée afin d'obtenir un éclairage quel que soit l'encombrement. De tels dispositifs sont équipés, comme décrit par exemple dans le document de brevet EP 0 119 908, d'un projecteur de lumière à l'extrémité d'un guide de lumière souple dont l'autre extrémité est reliée à un générateur de lumière. Afin de procéder à un contrôle efficace, le projecteur est à focalisation réglable dans le document cité. Le transport de lumière peut également être assuré par fibres optiques, comme décrit dans le document de brevet FR 2 168 842 qui dispose les extrémités de fibres dans des cavités situées sur le pourtour d'une couronne.

De telles solutions autorisent une vision limitée d'une portion de surface et non une vision plus globale sur une aire suffisante de mur ou de plafond à inspecter.

L'invention vise précisément à réaliser un éclairage sous incidence rasante permettant d'embrasser d'un coup des surfaces relativement importantes, telles que des parties suffisantes de mur et/ou de plafond.

Pour ce faire, l'invention propose de réaliser un pinceau de lumière de largeur suffisante pour « mettre en relief » la surface éclairée en incidence rasante.

Plus précisément, l'invention a pour objet une unité d'éclairage en incidence rasante, de préférence mobile et autonome, destinée à contrôler un état de surface, comportant :
- une rampe de sources lumineuses à faisceau directif ; et
- un boîtier de logement de ladite rampe monté en rotation autour d'au moins un axe sur un pied ;
- ladite rampe étant équipée de moyens opto-mécaniques de formation d'un pinceau lumineux ayant une ouverture angulaire dans une direction longitudinale sensiblement supérieure à son ouverture angulaire dans une direction transverse.

L'ouverture angulaire du pinceau lumineux est définie comme deux fois l'angle, mesuré à partir de l'axe de propagation dudit pinceau, en correspondance duquel l'intensité lumineuse du pinceau est réduite de la moitié par rapport à sa valeur maximale.

De préférence, l'ouverture angulaire dans une direction longitudinale est comprise entre 45° et 180°, et de préférence entre 90° et 150°, alors que l'ouverture angulaire dans une direction transverse est inférieure ou égale à 20°, et de préférence à 10°.

Avantageusement lesdits moyens opto-mécaniques comportent des moyens de réglage de ladite ouverture angulaire dans une direction longitudinale.

Selon des modes de réalisation particuliers :
- lesdits moyens opto-mécaniques peuvent comprendre un support de sources lumineuses présentant une courbure dans une direction longitudinale de ladite rampe ;
- les moyens de réglage peuvent comprendre un moyen de réglage mécanique de la courbure dudit support ;
- le support peut être constitué d'une pluralité de segments rectilignes disposés de manière à former une courbe polygonale présentant une courbure moyenne dans une direction longitudinale de ladite rampe ;
- les moyens opto-mécaniques peuvent comprendre un support de sources lumineuses présentant des logements individuels pour lesdites sources lumineuses ayant une orientation adaptée pour réaliser une ouverture angulaire prédéterminée dans ladite direction longitudinale ;
- les moyens opto-mécaniques peuvent comprendre un ensemble de lentilles individuelles associées à chaque source ;
- les moyens de réglage peuvent comprendre des moyens d'orientation desdites lentilles individuelles ;
- les moyens opto-mécaniques peuvent comprendre une lentille cylindrique ou torique globalement associé à ladite rampe ;
- les sources lumineuses peuvent être choisies parmi des diodes électroluminescentes, des diodes électroluminescentes organiques, des lampes halogènes et des câbles à fibres optiques ;
- le boîtier de logement peut être monté en rotation autour d'un axe longitudinal et/ou d'au moins un axe transversal par rapport à ladite rampe ;
- le boîtier de logement peut être monté réglable en hauteur sur ledit pied ;
- le boîtier de logement est monté en rotation autour dudit axe transversal de manière à pouvoir prendre une position inclinée, rabattue contre ledit pied, dans laquelle ladite rampe est orientée obliquement vers le bas.

D'autres caractéristiques et avantages de l'invention apparaîtront à la lecture de la description détaillée ci-après, en référence aux figures annexées qui représentent, respectivement :
- la figure 1A, une vue d'ensemble d'une unité d'éclairage de l'invention dans laquelle le boîtier de la rampe de sources lumineuses présente une première orientation, adaptée au contrôle d'un état de surface d'un plafond ;
- la figure 1 B, une vue d'ensemble d'une unité d'éclairage de l'invention dans laquelle le boîtier de la rampe de sources lumineuses présente une seconde orientation, adaptée au contrôle d'un état de surface d'un mur ;
- la figure 1C, une vue d'ensemble d'une unité d'éclairage de l'invention dans laquelle le boîtier de la rampe de sources lumineuses présente une troisième orientation, adaptée au contrôle d'un état de surface de la partie basse d'un mur ; et
- les figures 2A, 2B, 2C et 2D des vues en coupe de rampes de sources lumineuses correspondant à différents modes de réalisation de l'invention.

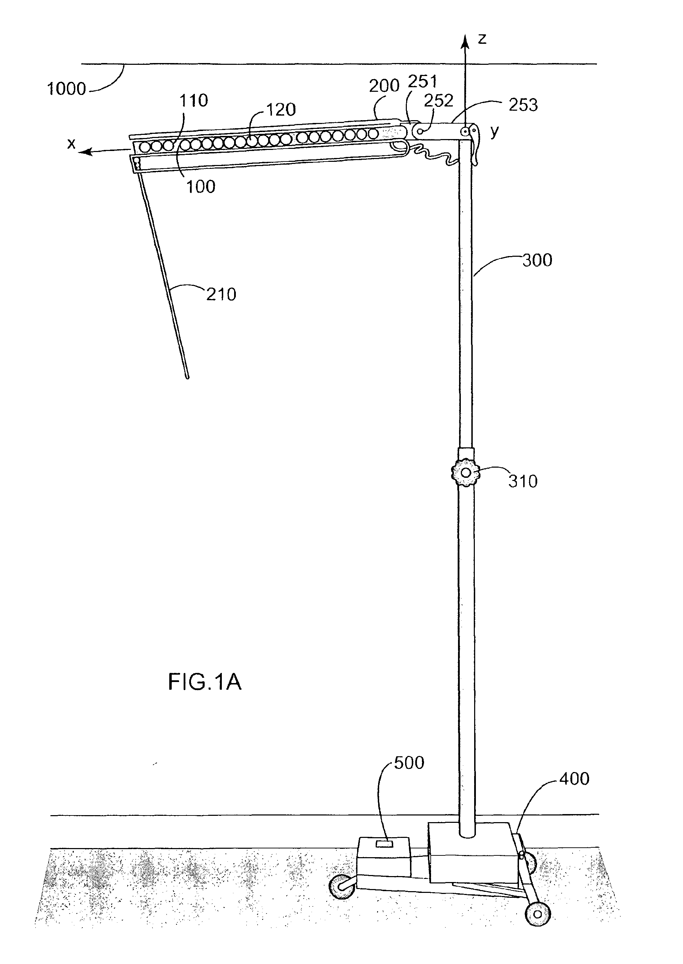

Comme illustré sur les figures 1A à 1C, un exemple d'unité d'éclairage selon l'invention se compose essentiellement d'une rampe d'éclairage 100 logée dans un boîtier 200 de forme allongée, d'une longueur de l'ordre de 60 cm, qui est monté sur un pied 300 muni d'une base 400 équipée de moyens de déplacement. Dans l'exemple spécifique représenté sur les figures, la base 400 est constituée d'un chariot à trois roues 410 qui porte également les moyens d'alimentation électrique de la rampe 100.

Des moyens d'articulation 251, 252 permettent au boîtier 200 de tourner autour d'un axe longitudinal x (c'est-à-dire orienté dans le sens de la longueur du boîtier) et autour d'un axe transverse horizontal y, perpendiculaire aussi bien à l'axe longitudinal x qu'à l'axe z du pied 300. De cette façon, le boîtier 200 peut passer d'une première position (figure 1A) dans laquelle la rampe d'éclairage 100 est orientée horizontalement, à une deuxième position (figure 1 B) dans laquelle elle est orientée verticalement.

L'homme du métier comprendra que l'unité d'éclairage peut également être munie d'un troisième moyen d'articulation permettant la rotation du boîtier 200 de tourner aussi autour de l'axe z ; a contrario, l'unité pourrait comporter un seul moyen d'articulation.

La comparaison entre les figures 1A et 1B montre que le boîtier 200 est également monté réglable en hauteur, par exemple grâce à un mécanisme 310 d'allongement télescopique du pied 300. Dans sa position la plus haute (figure 1A) le boîtier 200 se trouve à une hauteur du sol de l'ordre de 2,40 m à 2,80 m, en fonction de la hauteur d'un plafond 1000, alors que dans sa position la plus basse (figure 1B) il se trouve à une hauteur de l'ordre de 1 m à 1,50 m. Ces valeurs ne sont pas limitatives et peuvent dépendre des applications particulières considérées. Alternativement, le réglage de la hauteur du boîtier 200 peut être obtenu par un montage glissant sur le pied 300, qui dans ce cas n'a pas besoin d'être télescopique.

Une baguette de manipulation 210 permet à un utilisateur d'orienter facilement le boîtier 200 même lorsque ce dernier se trouve dans sa position la plus élevée. La baguette de manipulation 210 est de préférence articulée, afin de pouvoir se rabattre contre le boîtier 200 au cas où elle gênerait le positionnement de l'unité, comme dans le cas de la figure 1B.

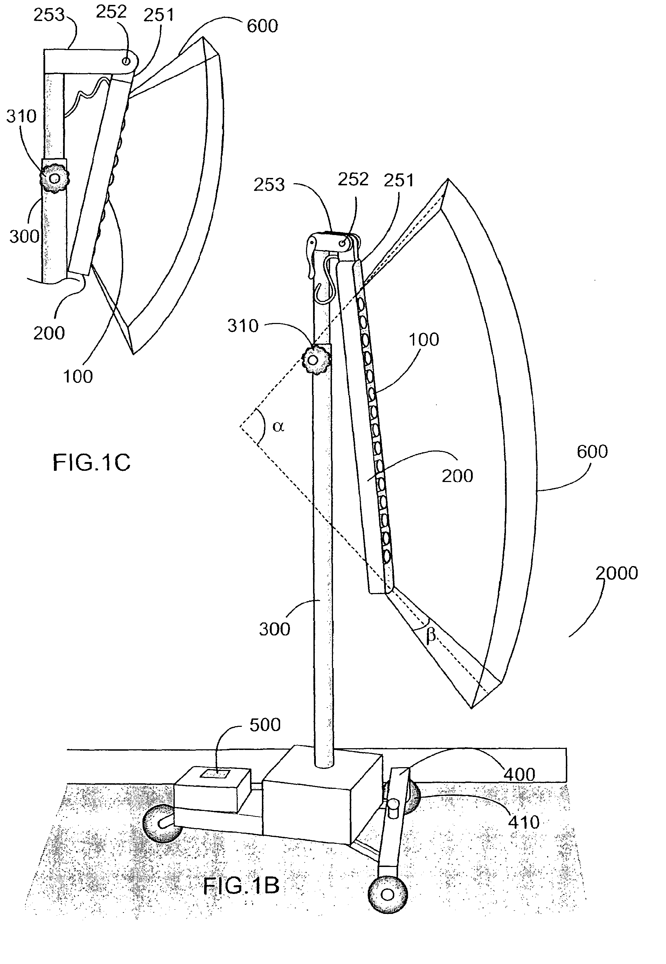

Avantageusement, les moyens d'articulation 251 et 252, ou au moins ces derniers, sont portés par un bras d'articulation 253 s'étendant perpendiculairement par rapport au pied 300 et présentant une longueur suffisamment importante pour permettre au boîtier 200 de prendre également une troisième position inclinée, rabattue contre ledit pied 300, dans laquelle la rampe 100 est orientée obliquement vers le bas. De cette façon, le pinceau de lumière 600 peut être dirigé vers la partie inférieure d'un mur sans qu'il soit nécessaire de modifier le réglage en hauteur du boîtier 200 (figure 1C).

La rampe lumineuse 100 comporte un alignement de sources lumineuses 120 disposées sur un support 110 et est en outre équipée de moyens opto-mécaniques de formation d'un pinceau lumineux 600 ayant une ouverture angulaire α dans une direction longitudinale sensiblement supérieure à son ouverture angulaire β dans une direction transverse, comme représenté sur la figure 1B. A titre d'exemple, l'ouverture angulaire longitudinale α peut prendre des valeurs compris entre 45° et 180° et de préférence entre 90° et 150°, alors que l'ouverture angulaire transverse β peut prendre des valeurs inférieures ou égales à 20° et de préférence inférieures ou égales à 10°.

En règle général, l'angle α devra être aussi grand que possible et l'angle β aussi petit que possible. Cependant, dans certains cas, il peut être utile de limiter la valeur de α afin de ne pas trop disperser la lumière et de réaliser un éclairage plus localisé et plus intense : pour cette raison, il est avantageux qu'au moins l'ouverture angulaire longitudinale α puisse être réglable.

Lorsque la rampe 100 est orientée horizontalement et positionnée en hauteur à proximité d'un plafond 1000, comme représenté dans la figure 1A, le pinceau lumineux 600 réalise un éclairement rasant d'une portion dudit plafond. Ces conditions d'éclairement mettent en évidence les moindres irrégularités de la surface de ce dernier, permettant un contrôle sévère de la qualité d'une peinture ou d'un enduit, par exemple.

Lorsque la rampe 100 est orientée verticalement et positionnée à proximité d'un mur 2000 à une hauteur intermédiaire entre la base et le sommet dudit mur, comme représenté dans la figure 1 B, le pinceau lumineux 600 réalise un éclairement rasant d'une portion dudit mur, permettant un contrôle de l'état de surface de ce dernier.

Le contrôle visuel peut être effectué simultanément à la pose d'une peinture ou d'un enduit sur ledit mur ou plafond.

L'intérêt d'utiliser un pinceau 600 ayant une ouverture angulaire longitudinale α importante est qu'il est ainsi possible d'éclairer d'un seul coup une grande surface dudit mur ou plafond pour réaliser un contrôle de qualité d'une manière simple et rapide. Par contre, il est avantageux d'obtenir une petite ouverture transverse β de manière à utiliser d'une manière efficace l'énergie lumineuse : des rayons lumineux sortant de la rampe 100 avec un angle transverse important ne pourraient pas contribuer à réaliser un éclairage rasant et seraient donc perdus. De plus, une partie de ces rayons serait dirigé vers l'utilisateur de l'unité d'éclairage et pourrait l'éblouir, en le gênant dans son travail d'inspection visuelle.

En général, la pose de l'enduit et l'inspection visuelle simultanée des murs et/ou des plafonds d'une pièce nécessite des nombreux déplacements de l'unité d'éclairage de l'invention : pour cette raison, la base 400 du pied 300 est de préférence munie de moyens de déplacement, tels que des roues 410. Ladite base porte également des moyens d'alimentation électrique 500. Le poids relativement important de ces derniers leur permet de servir également de lest, assurant une meilleure stabilité de l'ensemble. Avantageusement, les moyens d'alimentation électrique 500 comprennent une batterie et un chargeur : de cette façon il est possible de déplacer librement l'unité d'éclairage à l'intérieur d'un logement en réfection sans être gênés par un câble d'alimentation devant être branché en permanence à une prise électrique.

Si la tension de la batterie est inférieure ou égale à la tension maximale pouvant être supportée par les sources lumineuses 120 de la rampe 100, les moyens d'alimentation électrique 500 comprennent également une simple résistance de limitation de courant. Dans le cas contraire, l'utilisation d'un régulateur de courant ou d'une résistance de puissance est généralement nécessaire.

D'une manière conventionnelle, les moyens d'alimentation électrique 500 peuvent comprendre également un interrupteur général et/ou un régulateur de puissance lumineuse.

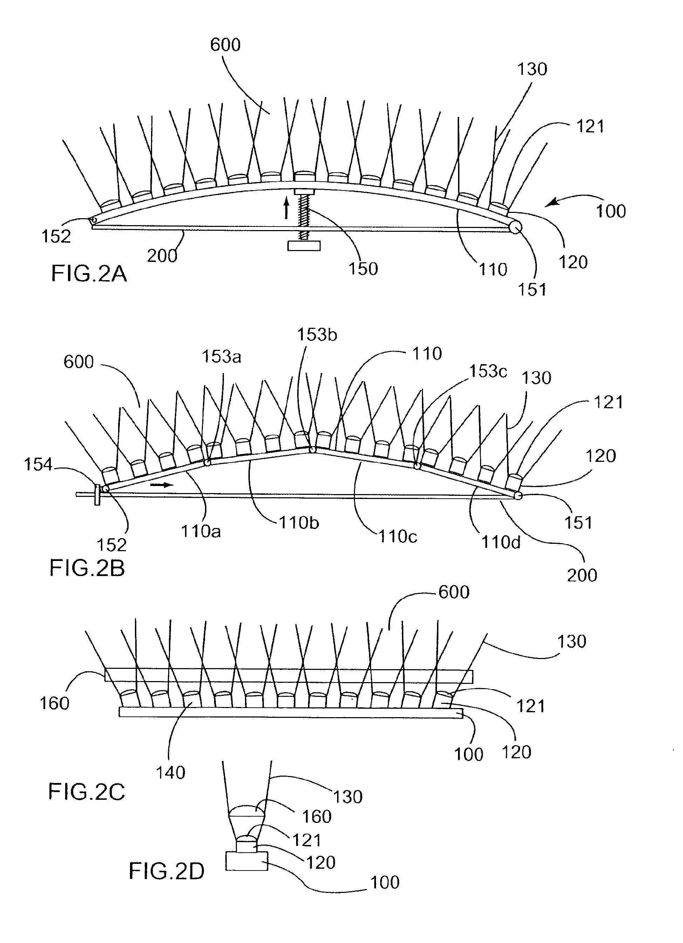

Divers modes de réalisation de la rampe 100, caractérisés par des différents moyens opto-mécaniques de formation du pinceau lumineux 600, seront décrit ci-après en référence aux figures 2A, 2B, 2C et 2D.

La figure 2A montre une vue en coupe longitudinale d'une rampe 100 constitué par un support flexible 110 présentant une courbure dans une direction longitudinale, sur lequel sont montés des sources lumineuses 120, disposée selon une rangée. Les sources lumineuses 120 sont des diodes électroluminescentes ou, dans d'autres modes de réalisation, des diodes électroluminescentes organiques ou des ampoules halogènes. Alternativement, elles peuvent être constituées par des extrémités libres de câbles à fibres optiques, couplés optiquement à leurs autres extrémités à des sources lumineuses logées, par exemples, dans un boîtier disposé sur la base 400. D'une manière générale, les sources de « lumière froide », telles que les diodes électroluminescentes à semiconducteur ou organiques ou les câbles à fibres optiques, sont préférées aux sources thermiques, telles que les lampes halogènes.

Les sources lumineuses 120 présentent une émission à faisceau directif, c'est-à-dire qu'elles émettent des faisceaux lumineux 130 non isotropes et essentiellement concentrés autour d'une direction déterminée, par exemple avec une ouverture angulaire inférieure ou égale à 30°, et de préférence inférieure ou égale à 10°. Le caractère directionnel de l'émission peut être obtenu, par exemple, à l'aide de lentilles individuelles 121 fixées à chaque source. Les lentilles 121 peuvent être sphériques, ce qui conduit à une émission présentant une symétrie de rotation, ou bien cylindriques ou toriques, de manière à concentrer la lumière de préférence dans une direction transverse. La figure 1A montre que l'ouverture angulaire transverse β du pinceau lumineux 600 correspond essentiellement à celle de chaque faisceau individuel 130, alors son ouverture angulaire longitudinale α dépend essentiellement de la courbure du support 110 : en effet ledit pinceau 600 résulte de la superposition des faisceaux individuels 130, se propageant dans des directions légèrement différentes.

La rampe 100 de la figure 1A comporte également des moyens de réglage de l'ouverture angulaire longitudinale α, qui sont en fait des moyens de réglage mécanique de la courbure du support 110. Ces moyens comprennent : une tige filetée 150 qui traverse le fond du boîtier 200 et s'appuie sur la partie centrale du support 110, une charnière 151 reliant une extrémité dudit support 110 au boîtier 200 et des moyens de guidage en glissement 152 de son autre extrémité. Lorsque la tige filetée 150 est vissée, elle exerce une pression sur le support 110, qui a tendance à fléchir.

La charnière 151 et les moyens de guidage 152, comprenant un ergot faisant saillie du support 110 et une rainure ou rail prévu dans une paroi du boîtier 200, permettent aux deux extrémités dudit support 110 de se rapprocher l'une de l'autre : de cette façon, la courbure de la rampe 100 augmente, et avec elle l'ouverture angulaire longitudinale α du pinceau 600. Lorsque la tige 150 est dévissée, l'élasticité du support 110 tend à en réduire la courbure, et donc ladite ouverture angulaire longitudinale α décroît.

La figure 2B montre une variante de l'invention dans laquelle le support 110 est constitué d'une pluralité (quatre) de segments rectilignes 110a, 110b, 110c, 110d articulés entre eux à l'aide de charnières 153a, 153b, 153c. La courbure longitudinale moyenne du support 110 peut être réglée en modifiant l'angle entre des segments rectilignes adjacents, par exemple à l'aide d'un système charnière 150 - moyen de guidage 152, similaire à celui de la figure 2A.

Dans le mode de réalisation représenté, la tige filetée 150 est absente et l'augmentation de la courbure du support 110 est obtenue directement en poussant son extrémité libre en translation vers l'extrémité opposée, comme montré par la flèche. Des moyens de verrouillage 154 sont prévus pour fixer ladite extrémité libre dans la position souhaitée. Il est entendu que les moyens de réglage de la courbure représentés sur la figure 2A pourraient également être utilisés en combinaison avec le support de la figure 2B et inversement.

Le mode de réalisation de la figure 2B est particulièrement avantageux du point de vue de la production, car des segments de longueur standard, comportant par exemple 4 ou 6 sources lumineuses 120, peuvent être combinés pour réaliser des rampes de longueurs différentes.

Les figures 2C et 2D montrent des vues en coupe longitudinale et transversale respectivement d'une rampe selon un troisième mode de réalisation de l'invention. Dans ce cas, le support 100 est rectiligne et comporte des logement individuels 140 pour chaque source lumineuse 120, lesdites sources étant orientables ou orientées de manière à générer un pinceau 600 ayant l'ouverture angulaire longitudinale α souhaitée. En variante, les sources lumineuses 120 peuvent avoir une orientation fixe et être pourvues de lentilles individuelles 121 orientables.

Une lentille cylindrique ou torique 160 globalement associé à la rampe 110 focalise préférentiellement dans une direction transverse les faisceaux individuels 130, de manière à réduire l'angle α. Il est entendu que cette lentille 160 peut également être utilisée en association avec un support du type représenté sur les figures 2A et 2B.

## Revendications

1. Unité d'éclairage en incidence rasante, **caractérisé en ce qu'**elle comporte :
- une rampe (100) de sources lumineuses (120) à faisceau directif (130); et
- un boîtier (200) de logement de ladite rampe (100) monté en rotation autour d'au moins un axe sur un pied (300);
- ladite rampe étant équipée de moyens opto-mécaniques (100, 121, 150, 151, 152, 160) de formation d'un pinceau lumineux (600) ayant une ouverture angulaire (α) dans une direction longitudinale sensiblement supérieure à son ouverture angulaire (β) dans une direction transverse.

2. Unité d'éclairage en incidence rasante selon la revendication 1 dans laquelle ledit pinceau lumineux (600) présente une ouverture angulaire (α) dans une direction longitudinale comprise entre 45° et 180°, de préférence entre 90° et 150°, et une ouverture angulaire (β) dans une direction transverse inférieure ou égale 20°, de préférence à 10°.

3. Unité d'éclairage en incidence rasante selon la revendication 1 ou 2 dans laquelle lesdits moyens opto-mécaniques comportent des moyens de réglage (110, 150, 151, 152) de ladite ouverture angulaire dans une direction longitudinale.

4. Unité d'éclairage en incidence rasante selon l'une des revendications précédentes dans laquelle lesdits moyens opto-mécaniques comprennent un support (110) de sources lumineuses présentant une courbure dans une direction longitudinale de ladite rampe (100).

5. Unité d'éclairage en incidence rasante selon la revendication 4 lorsqu'elle dépend de la revendication 3 dans laquelle lesdits moyens de réglage comprennent un moyen de réglage mécanique (121, 150, 151, 152) de la courbure dudit support (110).

6. Unité d'éclairage en incidence rasante selon la revendication selon la revendication 4 ou 5 dans laquelle ledit support (110) est constitué d'une pluralité de segments rectilignes (110a, 110b, 110c, 110d) disposés de manière à former une courbe polygonale présentant une courbure moyenne dans une direction longitudinale de ladite rampe (100).

7. Unité d'éclairage en incidence rasante selon l'une des revendications précédentes dans laquelle lesdits moyens opto-mécaniques comprennent un support (110) de sources lumineuses (120) présentant des logements individuels pour lesdites sources lumineuses (120) ayant une orientation adaptée pour réaliser une ouverture angulaire (α) prédéterminée dans ladite direction longitudinale.

8. Unité d'éclairage en incidence rasante selon l'une des revendications précédentes dans laquelle lesdits moyens opto-mécaniques comprennent un ensemble de lentilles individuelles (121) associées à chaque source (120).

9. Unité d'éclairage en incidence rasante selon la revendication 8 lorsqu'elle dépend de la revendication 3 dans laquelle lesdits moyens de réglage comprennent des moyens d'orientation desdites lentilles individuelles.

10. Unité d'éclairage en incidence rasante selon l'une des revendications précédentes dans laquelle lesdits moyens opto-mécaniques comprennent une lentille cylindrique ou torique (160) globalement associé à ladite rampe (100).

11. Unité d'éclairage en incidence rasante selon l'une des revendications précédentes dans laquelle lesdites sources lumineuses (120) sont choisies parmi des diodes électroluminescentes, des diodes électroluminescentes organiques, des lampes halogènes et des câbles à fibres optiques.

12. Unité d'éclairage en incidence rasante selon l'une des revendications précédentes dans laquelle ledit boîtier de logement (200) est monté en rotation autour d'un axe longitudinal par rapport à ladite rampe (200).

13. Unité d'éclairage en incidence rasante selon l'une des revendications précédentes dans laquelle ledit boîtier de logement (200) est monté en rotation autour d'au moins un axe transversal par rapport à ladite rampe (100).

14. Unité d'éclairage en incidence rasante selon la revendication 13 dans lequel ledit boîtier de logement (200) est monté en rotation autour dudit axe transversal de manière à pouvoir prendre une position inclinée, rabattue contre ledit pied (300), dans laquelle ladite rampe (100) est orientée obliquement vers le bas.

15. Unité d'éclairage en incidence rasante selon l'une des revendications précédentes dans laquelle ledit boîtier de logement (200) est monté réglable en hauteur sur ledit pied (300).
